# EUROPEAN PATENT APPLICATION

(11) **EP 2 628 898 A2**
(43) Date of publication of application: **21.08.2013**
(21) Application number: 13154218.5
(22) Date of filing: 06.02.2013
(51) Int. Cl.: F01D 5/14

(54) **Turbomachine Including Flow Improvement System**

(30) Priority: 09.02.2012 US 201213369843
(71) Applicant: General Electric Company, Schenectady, New York 12345 (US)
(72) Inventor: Simpson, Stanley Frank, Greenville, SC South Carolina 29615 (US); Soranna, Francesco, Greenville, SC South Carolina 29615 (US); Rangwalla, Akil Abbas, Greenville, SC South Carolina 29615 (US); Siden, Gunnar Leif, Greenville, SC South Carolina 29615 (US); Stein, Alexander, Greenville, SC South Carolina 29615 (US)
(74) Representative: Cleary, Fidelma

(57) **Abstract**

A turbomachine includes a housing including a fluid path, and a first stage arranged within the housing. The first stage (27) includes a first plurality of airfoil members (136) and a second plurality of airfoil members (139). A second stage (28) is arranged within the housing (13) relative to the first stage (20). The second stage (28) includes a third plurality of airfoil members (143) and a fourth plurality of airfoil members (146). A flow improvement system (230) is associated with each of the first and second stages (27, 28). The flow improvement system (230) establishes a predetermined clocking of each of the first plurality of airfoil members (136) relative to corresponding ones of each of the third plurality of airfoil members (143), and each of the second plurality of airfoil members (139) relative to each of the fourth plurality of airfoil members (146). The predetermined clocking is configured and disposed to improve flow characteristics along the flow path (16).

## Description

### BACKGROUND OF THE INVENTION

The subject matter disclosed herein relates to the art of turbomachines and, more particularly, to a turbomachine including a flow improvement system.

Many turbomachines include a compressor portion linked to a turbine portion through a common compressor/turbine shaft or rotor and a combustor assembly. The compressor portion guides a compressed air flow through a number of sequential stages toward the combustor assembly. In the combustor assembly, the compressed air flow mixes with a fuel to form a combustible mixture. The combustible mixture is combusted in the combustor assembly to form hot gases. The hot gases are guided to the turbine portion through a transition piece. The hot gases expand through the turbine creating work that is output, for example, to power a generator, a pump, or to provide power to an aircraft. In addition to providing compressed air for combustion, a portion of the compressed airflow is passed through the turbine portion for cooling purposes.

In many cases, the compressor portion and/or the turbine portion will include an equal number of blades located in successive stationary or rotating rows. In such cases, a circumferential angular spacing between blades is the same in each of the successive rows. Generally, the circumferential spacing results in alignment of blades in the stationary rows and an alignment of blades in the rotating rows. This alignment creates various aerodynamic performance issues and/or thermal environment issues of a flow passing along a flow path of the compressor portion and/or the turbine portion. Manufacturers have clocked or circumferentially off-set adjacent rows of blades in the rotating rows or adjacent rows of blades in the stationary rows to control flow and influence aerodynamic performance and/or thermal environment.

In the compressor portion, air is drawn in through an intake and passed through the number of sequential stages. Each of the sequential stages includes a plurality of stators or nozzles that guides the air toward a plurality of rotating buckets or blades. The rotating blades force the airflow along the compressor to achieve a desired pressure increase. An interaction pattern, resulting from the air passing across stationary and rotating components, develops at each stage. Above cut-off, perturbations from the interaction coalesce to produce a spinning wave. In some cases, the spinning wave may propagate downstream through the compressor and may enter the combustor assembly. The spinning wave may also propagate upstream. In other cases, the spinning wave may form in a turbine portion and either propagates upstream or downstream along a turbine portion gas path. The development and propagation of the spinning wave can create undesirable unsteady pressure patterns as well as lead to the development of unwanted noise from the compressor portion.

### BRIEF DESCRIPTION OF THE INVENTION

According to one aspect of the invention, a turbomachine includes a housing including a fluid path, and a first stage arranged within the housing. The first stage includes a first plurality of airfoil members and a second plurality of airfoil members positioned along the fluid path. A second stage is arranged within the housing relative to the first stage. The second stage includes a third plurality of airfoil members and a fourth plurality of airfoil members positioned along the fluid path. A flow improvement system is associated with each of the first and second stages. The flow improvement system establishes a predetermined clocking of each of the first plurality of airfoil members relative to corresponding ones of each of the third plurality of airfoil members, and each of the second plurality of airfoil members relative to each of the fourth plurality of airfoil members. The predetermined clocking is configured and disposed to improve flow characteristics along the flow path.

According to another aspect of the invention, a turbomachine includes a housing including a fluid path, and a first stage arranged within the housing. The first stage includes a first plurality of airfoil members positioned along the fluid path. A second stage is arranged within the housing relative to the first stage. The second stage includes a second plurality of airfoil members positioned along the fluid path. A flow improvement system is associated with each of the first and second stages. The flow improvement system establishes a predetermined clocking of each of the first plurality of airfoil members relative to corresponding ones of each of the second plurality of airfoil members. The predetermined clocking is configured and disposed to set up a spinning wave from the second stage that is configured and disposed to interfere with another spinning wave from the first stage.

According to yet another aspect of the invention, a method of improving flow in a turbomachine includes guiding a fluid flow across a first turbomachine stage including a first plurality of airfoil members and a second plurality of airfoil members, and guiding the fluid flow across a second turbomachine stage having a third plurality of airfoil members circumferentially off-set relative to the first plurality of airfoil members and a fourth plurality of airfoil members circumferentially off-set relative to the second plurality of airfoil members to improve flow characteristics along the flow path.

According to still another aspect of the invention, a turbomachine includes a housing including a fluid path, and a first stage arranged within the housing. The first stage includes a first plurality of airfoil members and a second plurality of airfoil members positioned along the fluid path. A second stage is arranged within the housing relative to the first stage. The second stage includes a third plurality of airfoil members and a fourth plurality of airfoil members positioned along the fluid path. A flow improvement system is associated with each of the first and second stages. The flow improvement system establishes a predetermined clocking of each of the first plurality of airfoil members relative to corresponding ones of each of the third plurality of airfoil members, and each of the second plurality of airfoil members relative to each of the fourth plurality of airfoil members. The predetermined clocking is configured and disposed to improve flow characteristics along the fluid path and to set up a spinning wave from the second stage that is configured and disposed to interfere with another spinning wave from the first stage.

These and other advantages and features will become more apparent from the following description taken in conjunction with the drawings.

### BRIEF DESCRIPTION OF THE DRAWING

Embodiments of the present invention will now be described, by way of example only, with reference to the accompanying drawings, in which:
FIG. 1 is schematic diagram of a turbomachine including a flow improvement system in accordance with an exemplary embodiment;
FIG. 2 is a schematic representation of a plurality of airfoil members of a compressor portion of the turbomachine of FIG. 1 in accordance with an exemplary embodiment;
FIG. 3 is a schematic representation of a plurality of airfoil members of a turbine portion of the turbomachine of FIG. 1 in accordance with the exemplary embodiment.

The detailed description explains embodiments of the invention, together with advantages and features, by way of example with reference to the drawings.

### DETAILED DESCRIPTION OF THE INVENTION

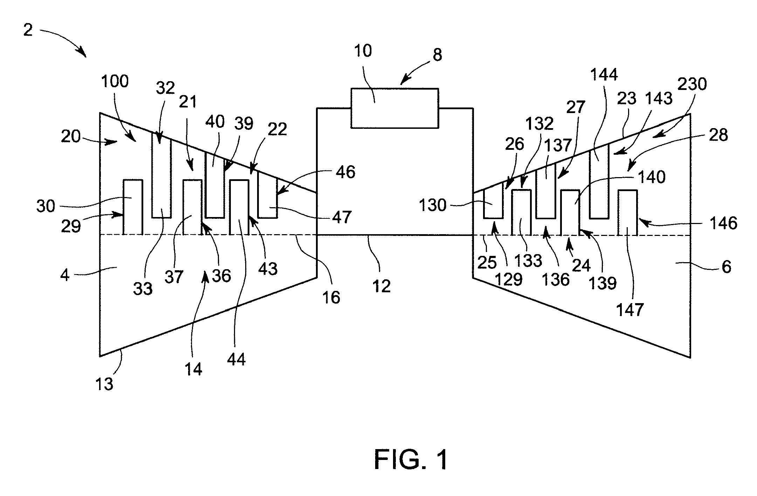

With reference to FIG. 1, a turbomachine constructed in accordance with an exemplary embodiment is illustrated generally at 2. Turbomachine 2 includes a compressor portion 4 fluidly connected to a turbine portion 6. A combustor assembly 8 also fluidly connects compressor portion 4 and turbine portion 6. Combustor assembly 8 includes a plurality of combustors, one of which is shown at 10, arranged in a can-annular array about turbomachine 2. The number and arrangement of combustors can vary.

As shown, compressor portion 4 is mechanically linked to turbine portion 6 through a common compressor/turbine shaft 12. Compressor portion 4 includes a housing 13 that encases a plurality of compressor stages 14 that extend along a fluid path 16. In the exemplary embodiment shown, compressor portion 4 includes a first compressor stage 20, a second compressor stage 21, and a third compressor stage 22. Turbine portion 6 includes a housing 23 that encases a plurality of stages 24 that extend along a fluid path 25. In the exemplary embodiment shown, the plurality of turbine stages 24 of turbine portion 6 includes a first turbine stage 26, a second turbine stage 27 and a third turbine stage 28. Of course it should be understood that the number of stages in compressor portion 4 and turbine portion 6 could vary.

With this arrangement, air passing into a compressor intake (not separately labeled) flows along fluid path 16 and is compressed through compressor stages 20-22 to form compressed air. A first portion of the compressed air flows into combustor assembly 8, mixes with a combustible fluid, and is then combusted to form combustion gases. The combustion gases expand through turbine stages 26-28 along fluid path 25 of turbine portion 6 creating work that is output from turbomachine 2. A second portion of the compressed air passes through turbine portion 6 as a cooling fluid.

First compressor stage 20 includes a plurality of rotating airfoil members 29. Rotating airfoil members 29 take the form of blades or buckets 30 that are coupled to common compressor/turbine shaft 12 through a first stage rotor (not shown). First compressor stage 20 also includes a plurality of stationary airfoil members 32. Stationary airfoil members 32 take the form of vanes or nozzles 33 fixedly mounted relative to compressor housing 13. Nozzles 33 guide the airflow toward second compressor stage 21. Accordingly, second compressor stage 21 includes a plurality of rotating airfoil members 36. Rotating airfoil members 36 take the form of blades or buckets 37 that are coupled to common compressor/turbine shaft 12 through a second stage rotor (not shown). Second compressor stage 21 also includes a plurality of stationary airfoil members 39. Stationary airfoil members 39 take the form of vanes or nozzles 40 fixedly mounted relative to compressor housing 13. Nozzles 40 direct the airflow toward third compressor stage 22. Third compressor stage 22 includes a plurality of rotating airfoil members 43. Rotating airfoil members 43 take the form of blades or buckets 44 that are coupled to common compressor/turbine shaft 12 through a third stage rotor (not shown). Third compressor stage 22 also includes a plurality of stationary airfoil members 46. Stationary airfoil members 46 take the form of vanes or nozzles 47 fixedly mounted relative to compressor housing 13. Nozzles 47 guide the airflow toward a subsequent downstream stage (not shown) or toward combustor assembly 8.

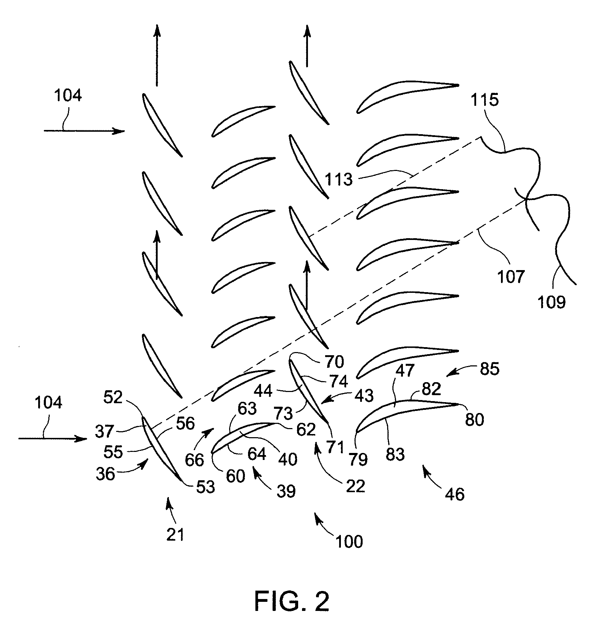

Reference will now be made to FIG. 2, in describing second and third compressor stages 21 and 22. As shown, each of the second plurality of rotating airfoil members 36 includes a leading edge 52 and a trailing edge 53 that are joined by a suction side 55 and a pressure side 56. Similarly, each of the second plurality of stationary airfoil members 39 includes a leading edge 60 and a trailing edge 62 that are joined by a suction side 63 and a pressure side 64. Second plurality of stationary airfoil members 39 are spaced one from another to form a plurality of second stage nozzle passages, one of which is indicated at 66. Likewise, third plurality of rotating airfoil members 43 include a leading edge 70 and a trailing edge 71 that are joined by a suction side 73 and a pressure side 74. Third plurality of stationary airfoil members 46 include a leading edge 79 and a trailing edge 80 that are joined by a suction side 82 and a pressure side 83. Third plurality of stationary airfoil members 46 are spaced one from another to establish a plurality of third stage nozzle passages, one of which is indicated at 85.

In accordance with one aspect of the exemplary embodiment, turbomachine 2 includes a flow improvement system that takes the form of a spinning wave reduction system 100 that reduces spinning wave mode propagation along flow path 16. More specifically, an airflow, such as indicated at 104, passes from first stage 20 toward second stage 21. Airflow 104 passes across second plurality of rotating members 36 and creates a wake zone (not shown) that leaves trailing edge 53 and flows toward third stage 22. A first spinning wave 107 having a first pressure pattern or spinning wave mode 109 develops along flow path 16 as a result of interactions between the second plurality of rotating members 36 and the second plurality of stationary airfoil members 39. The term "spinning wave" should be understood to include a wave having a non-homogenous pressure pattern that develops as a result of interactions between stationary and rotating members. First spinning wave 107 begins to propagate downstream in compressor portion 4. The airflow passing from trailing edge 71 of third plurality of rotating airfoil members 43 creates a wake zone (not shown) that passes over the third plurality of stationary airfoil members 46. A second spinning wave 113 including a second pressure pattern or spinning wave mode 115 develops along flow path 16 as a result of interactions between the third plurality of rotating members 43 and the third plurality of stationary airfoil members 46. Second spinning wave 113 begins to propagate downstream in compressor portion 4.

Spinning wave reduction system 100 establishes a desired clocking or circumferential offset of the second plurality of rotating airfoil members 36 relative to the third plurality of rotating airfoil members 43. As shown, spinning wave reduction system 100 establishes a desired relative positioning such that first spinning wave 107 passes between second and third stage nozzle passages 66 and 85 and second spinning wave 113 passes through third stage nozzle passages 85. The particular clocking established by spinning wave reduction system 100 ensures that first spinning wave mode 109 and second spinning wave mode 115 destructively interfere one with the other. The destructive interference reduces downstream propagation of spinning wave modes in compressor portion 4.

In further accordance with an exemplary embodiment, first turbine stage 26 includes a plurality of stationary airfoil members 129. Stationary airfoil members 129 take the form of vanes or nozzles 130 that are fixedly mounted relative to turbine housing 23. First turbine stage 26 also includes a plurality of rotating airfoil members 132. Rotating airfoil members 132 take the form of blades or buckets 133 that are coupled to common compressor/turbine shaft 12 through a first stage rotor (not shown). Buckets 133 guide the airflow toward second turbine stage 27. Accordingly, second turbine stage 27 includes a plurality of stationary airfoil members 136. Stationary airfoil members 136 take the form of vanes or nozzles 137 fixedly mounted relative to turbine housing 23. Second turbine stage 27 also includes a plurality of rotating airfoil members 139. Rotating airfoil members 139 take the form of blades or buckets 140 that are coupled to common compressor/turbine shaft 12 through a second stage rotor (not shown). Blades 140 direct the airflow toward third turbine stage 28. Third turbine stage 28 includes a plurality of stationary airfoil members 143. Stationary airfoil members 143 take the form of vanes or nozzles 144 fixedly mounted relative to turbine housing 23. Third turbine stage 28 also includes a plurality of rotating airfoil members 146. Rotating airfoil members 146 take the form of blades or buckets 147 that are coupled to common compressor/turbine shaft 12 through a third stage rotor (not shown). Blades 147 guide the airflow toward a subsequent downstream stage (not shown) or to an exhaust system also not shown.

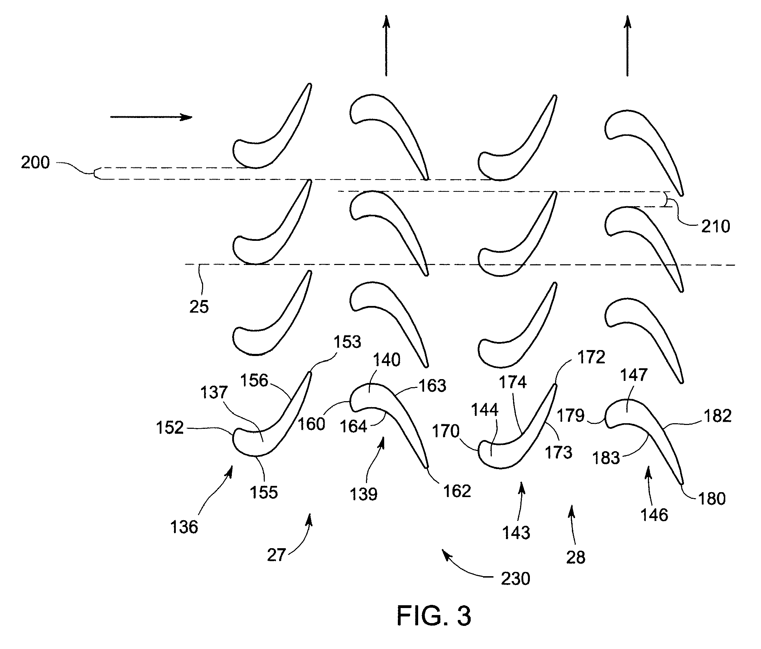

Reference will now be made to FIG. 3, in describing second and third turbine stages 27 and 28. As shown, each of the second plurality of stationary airfoil members 136 includes a leading edge 152 and a trailing edge 153 that are joined by a suction side 155 and a pressure side 156. Similarly, each of the second plurality of rotating airfoil members 139 includes a leading edge 160 and a trailing edge 162 that are joined by a suction side 163 and a pressure side 164. Likewise, third plurality of stationary airfoil members 143 include a leading edge 170 and a trailing edge 172 that are joined by a suction side 173 and a pressure side 174. Third plurality of rotating airfoil members 146 include a leading edge 179 and a trailing edge 180 that are joined by a suction side 182 and a pressure side 183.

In accordance with another aspect of the exemplary embodiment, turbomachine 2 includes a flow improvement system that takes the form of a multistage clocking arrangement 230. Multi-stage clocking arrangement 230 establishes a predetermined circumferential off-set or clocking of each of the plurality of stationary airfoil members 136 of second turbine stage 27 relative to corresponding ones of each of the plurality of stationary airfoil member 143 of third turbine state 28 by a first margin 200. In addition, multi-stage clocking system 230 establishes a predetermined circumferential off-set or clocking of each of the plurality of rotating airfoil 139 of second turbine stage 27 relative to corresponding ones of the rotating airfoil member 146 of third turbine state 28 by a second margin 210. In accordance with one aspect of the exemplary embodiment, the first margin is substantially identical to second margin 210. In accordance with another aspect of the exemplary embodiment, first margin 200 is distinct from second margin 210. In either case, multi-stage clocking system 230 in which the stationary and rotating airfoil members in one stage are clocked relative to corresponding ones of the stationary and rotating airfoil member of the second stage creates a flow path having cleaner propagation of upstream wakes. Cleaner propagation may take the form of reducing secondary flow between turbine blades that may lead to increased overall machine operating characteristics.

At this point it should be understood that the exemplary embodiments provide a system for improving flow within a turbomachine. The exemplary embodiments enhance fluid flow characteristics in a compressor by setting up destructive interactions between spinning wave modes moving along the flow path and in a turbine by setting a predetermined clocking of sequential turbine stages. The reduction of spinning wave mode propagation in the compressor portion leads to improved combustor operation, reduced system dynamics, and enhanced service life for the turbomachine. The exemplary embodiments also establish a particular turbine flow path that leads to cleaner propagation of upstream wakes. Cleaner propagation of upstream wakes leads to a reduction in secondary flows between turbine blades that enhance overall machine operating characteristics.

It should be understood that while shown in connection with second and third successive stages in the compressor portion, the spinning wave reduction system could be associated with additional compressor stages that are either successive or spaced one from another by additional stages. Moreover, while described as reducing spinning wave propagation in a compressor portion of a turbomachine, the exemplary embodiment can also be employed to reduce spinning wave propagation in a turbine portion of a turbomachine. It should also be understood that in addition to clocking adjacent rows of the plurality of rotating airfoil members, adjacent rows of the plurality of stationary airfoil members may also be clocked one relative to another. It should be understood that clocking may be achieved by axial blade rows having an equal number of airfoil members or blade rows having a different number of airfoil members. For example, clocking may be achieved by employing a blade row or rows having an integer multiple of airfoil members relative to an adjacent blade row.

Furthermore, the exemplary embodiments include clocking adjacent stages of the turbomachine, such that stators in one stage are clocked relative to stators in an adjacent stage, and rotors in the one stage are clocked relative to rotors in the adjacent stage. Additionally, while described in terms of modifying spinning waves propagating downstream through a compressor portion, the spinning wave reduction system can also be configured to modify spinning waves traveling upstream through the compressor portion.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A turbomachine (2) comprising:
a housing (13) including a fluid path (16);
a first stage (27) arranged within the housing (13), the first stage (27) including a first plurality of airfoil members (136) and a second plurality of airfoil members (139) positioned along the fluid path;
a second stage (28) arranged within the housing (13) relative to the first stage (28), the second stage including a third plurality of airfoil members (143) and a fourth plurality of airfoil members (146) positioned along the fluid path (161); and
a flow improvement system (230) associated with each of the first (27) and second (28) stages, the flow improvement system (230) establishing a predetermined clocking of each of the first plurality of airfoil members (136) relative to corresponding ones of each of the third plurality of airfoil members (143), and each of the second plurality of airfoil members (139) relative to each of the fourth plurality of airfoil members (146), the predetermined clocking being configured and disposed to improve flow characteristics along the flow path.

2. The turbomachine according to claim 1, wherein each of the first plurality of airfoil members (136) is circumferentially off-set relative to corresponding ones of each of the third plurality of airfoil members (143) by a first margin (200).

3. The turbomachine according to claim 1 or 2, wherein each of the second plurality of airfoil members (139) are circumferentially off-set relative to each of the fourth plurality of airfoil members (146) by a second margin (210).

4. The turbomachine according to claim 3, wherein the first margin (200) is substantially identical to the second margin (210).

5. The turbomachine according to any preceding claim, wherein the second and fourth pluralities of airfoil members (139, 146) constitute rotating airfoil members.

6. The turbomachine according to any preceding claim, wherein the first and third pluralities of airfoil members constitute stationary airfoil members.

7. The turbomachine according to any preceding claim, wherein the turbomachine (2) constitutes a turbine portion.

8. The turbomachine according to any of claims 1 to 6, wherein the turbomachine constitutes a compressor portion.

9. A method of improving flow in a turbomachine, the method comprising:
guiding a fluid flow (16) across a first turbomachine stage (27) including a first plurality of airfoil members (136) and a second plurality of airfoil members (139); and
guiding the fluid flow (16) across a second turbomachine stage (28) having a third plurality of airfoil members (143) circumferentially off-set relative to the first plurality of airfoil members (136) and a fourth plurality of airfoil members (146) circumferentially off-set relative to the second plurality of airfoil members (139) to improve flow characteristics along the flow path (16).

10. The method according to claim 9, wherein guiding the fluid flow (16) across the first plurality of airfoil members (136) includes passing the fluid flow across a plurality of stationary airfoil members (136).

11. The method of claim 10, wherein guiding the fluid flow over the second plurality of airfoil members (139) includes passing the first fluid across a plurality of rotating airfoil members (139) arranged downstream of the plurality of stationary airfoil members (136).

12. The method of claims 9 to 11, wherein passing the fluid flow over the first plurality of airfoil members (136) includes passing the fluid flow over the first turbomachine stage (27) having a first predetermined number of stationary airfoil members (136) and passing the fluid flow over the third plurality of airfoil members (143) includes passing the fluid flow over the second turbomachine stage (28) having a second predetermined number of stationary airfoil members (143) that is identical to the first predetermined number.

13. The method of claims 9 to 11, wherein passing the fluid flow over the first plurality of airfoil members (136) includes passing the fluid flow (16) over the first turbomachine stage (27) having a first predetermined number of stationary airfoil members (136) and passing the fluid flow (16) over the third plurality of airfoil members (143) includes passing the fluid flow over a second turbomachine stage (28) having a second predetermined number of stationary airfoil members (143) that is distinct from the first predetermined number.

14. The method of claims 9 to 13, wherein passing the fluid flow over the second plurality of airfoil members (139) includes passing the fluid flow over a first turbomachine stage (27) having a first predetermined number of rotating airfoil members (139) and passing the fluid flow over the fourth plurality of airfoil members (146) includes passing the fluid flow over a second turbomachine stage (28) having a second predetermined number of rotating airfoil members (146) that is identical to the first predetermined number.

15. The method of claims 9 to 13, wherein passing the fluid flow over the second plurality of airfoil members (139) includes passing the fluid flow over a first turbomachine stage (27) having a first predetermined number of rotating airfoil members (139) and passing the fluid flow over the fourth plurality of airfoil members (146) includes passing the fluid flow over a second turbomachine stage (28) having a second predetermined number of rotating airfoil members (146) that is distinct from the first predetermined number.
